# EUROPÄISCHE PATENTANMELDUNG

(11) **EP 3 239 224 A2**
(43) Veröffentlichungstag der Anmeldung: **01.11.2017**
(21) Anmeldenummer: 17165085.6
(22) Anmeldetag: 05.04.2017
(51) Int. Cl.: C08K 3/00, C08K 5/42, C08L 67/02, C08K 9/06, C08L 23/08

(54) **THERMOPLASTISCHE FORMMASSEN**

(30) Priorität: 28.04.2016 EP 16167447; 11.11.2016 EP 16198341
(71) Anmelder: LANXESS Deutschland GmbH, 50569 Köln (DE)
(72) Erfinder: PLUTOWSKI, Ulrich, 41539 Dormagen (DE); BIENMÜLLER, Matthias, 47803 Krefeld (DE); ZIMNOL, Ralf, 51491 Overath (DE); NEUWALD, Boris, 50733 Köln (DE); SANGERMANN, Sarah, 50933 Köln (DE)

(57) **Zusammenfassung**

Die Erfindung betrifft Zusammensetzungen sowie daraus herzustellende Formmassen und darauf wiederum basierende Erzeugnisse aus Polyalkylenterephthalat oder Polyalkylenfuranoat, wenigstens einem Füll- oder Verstärkungsstoff und wenigstens einem sekundären Alkansulfonat mit zwei Alkylresten.

## Beschreibung

Die Erfindung betrifft Zusammensetzungen sowie daraus herzustellende Formmassen und darauf wiederum basierende Erzeugnisse enthaltend Polyalkylenterephthalat oder Polyalkylenfuranoat, wenigstens einen Füll- oder Verstärkungsstoff und wenigstens ein sekundäres Alkansulfonat mit zwei Alkylresten.

### Stand der Technik

Aus Kunststoffe, Eigenschaften und Anwendungen, H. Domininghaus et. al. 2008, Kapitel 2.2 Synthetische Kunststoffe, Polykondensate, Seite 874, 2008, Verlag Springer (ISBN 978-3-540-72400-1) ist bekannt, dass das Lackieren von Polybutylenterephthalat (PBT) basierten Erzeugnissen mit verschiedenen Lacksystemen, wie z. B. mit Hydro-Soft-Lacken, möglich ist. Auch für die Kraftfahrzeug-Industrie sind Grundierungs- und Lacksysteme bekannt, die eine On-line-Lackierung von PBT bis 160°C gestatten. Gemäß Standothek, Kunststoffe und ihre Lackierung, Produktbroschüre der Firma Standox, Wuppertal, D12185782 D1007 5500, können bei der Lackierung zahlreiche Probleme auftreten, die wiederum von einer Vielzahl von Parametern abhängig sind. Beispielhaft seien hier nur genannt eine unzureichende Vorbehandlung, ungeeignete Lösungsmittel, zu frühes Lackieren nach der Reinigung, Haftungsstörungen durch ungeeignete Haftvermittler, Verlaufsstörungen durch ungeeignete Lösungsmittel etc.. PBT basierte Erzeugnisse sind vorwiegend in den Karosserieaußenteilen von Kraftfahrzeugen zu finden, insbesondere in Kotflügeln und Heckklappen, als sichtbare Fahrzeugkomponenten, wo es auf eine besonders gute Lackierung ankommt.

Aus WO 2016/022243 A1 sind Zusammensetzungen enthaltend einen Polyester mit 1,4-Cyclohexandimethylentherephthalat-Einheiten, einem halogenfreien Polycarbonat, einem bromierten, aromatischen Polycarbonat und einem unsubstituierten oder substituierten C₂-C₁₈ - Hydrocarbylsulfonsäuresalz mit verbessertem Flammschutz und verbesserter Transparenz bekannt. Insbesondere wird 3-(Phenylsulfonyl)benzolsulfonat Kaliumsalz [CAS Nr. 63316-43-8] eingesetzt.

Aus EP0372799 A2 sind thermoplastische Polyesterzusammensetzungen mit einem anionischen, antistatischen Agens vom Sulfonat-Typ, sowie einer Organophosphorverbindung und einem organischen, chelatisierenden Agens bekannt. Als Agens vom Sulfonat-Typ werden lineare Metallalkylsulfonate, wie Natriumdodecylsulfonat, oder metallalkylaromatische Sulfonate eingesetzt.

EP 0373465 A2 betrifft thermoplastische Formmassen auf der Basis von Polyalkylenterephtalat, aromatischem Polycarbonat und gegebenenfalls kautschukelastischem Polymerisat, die mit speziellen Stabilisatoren versehen sind, sowie aus den thermoplastischen Formmassen hergestellte Formkörper. Erst durch Zusatz einer Kombination spezieller Phosphorverbindungen werden Formmassen erhalten, mit denen die Lackierbarkeit und die Lackhaftung daraus hergestellter Erzeugnisse deutlich verbessert wird.

Im Gegensatz zu Polyalkylenterephthalaten handelt es sich bei Polycarbonat (PC) um einen amorphen Thermoplasten. Als amorphes Material bezeichnet man in der Physik und in der Chemie einen Stoff, bei dem die Atome keine geordneten Strukturen, sondern ein unregelmäßiges Muster bilden und lediglich über Nahordnung, nicht aber Fernordnung verfügen. Die Amorphizität des PCs verbessert stets Oberfläche und Schlagzähigkeit und vereinfacht dadurch generell eine Lackanhaftung.

Aufgabe der vorliegenden Erfindung war es jedoch, Polyalkylenterephthalat basierte Zusammensetzungen ohne Einsatz von Polycarbonat für Formmassen bereitzustellen, die aufgrund ihrer chemischen Zusammensetzung das Auftreten oben beschriebener Lackierfehler auf durch Spritzguss herzustellenden Erzeugnissen reduzieren und damit einem Lackierer mehr Freiheiten bei der Auswahl des einzusetzenden Lackiersystems, insbesondere beim elektrostatischen Spritzen (ESTA), einräumen. Polyalkylenterephthalate haben nämlich den Vorteil, dass diese für die Verarbeitung im Spritzguss aufgrund des günstigeren Abkühl- und Prozessverhaltens im Vergleich zu PC besser geeignet sind.

### Erfindung

Lösung der Aufgabe und Gegenstand der Erfindung sind Zusammensetzungen sowie daraus herzustellende Formmassen und wiederum daraus herzustellende Erzeugnisse enthaltend
A) wenigstens ein Polyalkylenterephthalat oder Polyalkylenfuranoat, vorzugsweise Polyethylenterephthalat oder Polybutylenterephthalat,
B) wenigstens einen Füll- oder Verstärkungsstoff und
C) wenigstens ein sekundäres Alkansulfonat mit zwei Alkylresten.

Überraschenderweise zeigen auf den erfindungsgemäßen Zusammensetzungen basierende Erzeugnisse gegenüber dem Stand der Technik einen deutlich reduzierten spezifischen Oberflächenwiderstand und eignen sich daher hervorragend für Erzeugnisse die nach ihrer Herstellung einer Lackierung unterzogen werden, insbesondere für Erzeugnisse die einer Lackierung durch elektrostatisches Spritzen (ESTA) unterzogen werden. Erfindungsgemäße Erzeugnisse zeichnen sich zudem durch eine Kombination von hoher Wärmeformbeständigkeit, verbesserter Lackhaftung, niedrigem Oberflächenwiderstand und erhöhter Oberflächenspannung aus, welche es erlaubt, diese Erzeugnisse in Lackierstraßen im Serienprozess mittels ESTA-Verfahren zu lackieren.

Zudem zeigen erfindungsgemäße Erzeugnisse eine ausreichende Temperaturbeständigkeit um den kompletten Online Prozess beim Original Equipment Manufacturer (OEM) zu durchlaufen. Dies ist so z. B. für PC haltige Blends gemäß EP 0373465 A2 nicht der Fall, da die Zugabe von Polycarbonat die Formstabilität PC-Blends haltiger Erzeugnisse bei hohen Temperaturen beeinträchtigt. Durch die erfindungsgemäße Kombination der Komponenten B) und C) sind erstmalig Erzeugnisse auf Basis von Polyalkylenterephthalaten (Komponente A)) zugängig, die in einem Online Prozess ESTA lackiert werden können und zeitgleich keine feuchteabhängigen Dimensionsänderungen wie etablierte Materialien auf der Basis Polyamid und/oder Polyphenylenether zeigen.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind.

Der spezifische Oberflächenwiderstand ist ein Maß für die Fähigkeit, dem Oberflächenstrom zu widerstehen, der an der Oberfläche eines Kunststoffformteils entlang fließt. Diese Kenngröße ist von den Umgebungsbedingungen und dem Probekörper abhängig. Bei der Bestimmung des spezifischen Oberflächenwiderstands spielen die Luftfeuchtigkeit, Verunreinigungen der Oberfläche des Probekörpers, die Probenkörpergröße sowie die Elektrodenform und -anordnung eine entscheidende Rolle. Die als elektrostatische Eigenschaften bezeichnete Kenngröße von Kunststoffen ist abhängig vom spezifischen Oberflächenwiderstand des Materials und wird entsprechend der DIN EN ISO 61340-5-1 unterteilt.

Der Oberflächenwiderstand in Ω [Ohm] wurde im Rahmen der vorliegenden Erfindung gemäß DIN IEC 60093 an Rundplatten des zu prüfenden Materials mit 80 mm Ø und 4 mm Dicke bestimmt. Dazu wurden auf die Rundplatte Silberelektroden aufgedampft. Der Oberflächenwiderstand dient im Rahmen der vorliegenden Erfindung zur Charakterisierung der Anwendungsmöglichkeit von Lacken auf erfindungsgemäßen Erzeugnissen.

Übliche Abscheideversuche von z. B. Elektrotauchlacken auf mittels ESTA zu lackierenden Erzeugnissen werden im Labor mit der Strom-Zeit-Kurve verfolgt. Daraus werden integrale Kenngrößen ermittelt. Der mit dem Aufbau einer Lackschicht verbundene Anstieg des Oberflächenwiderstandes und die Reduzierung des Stromflusses führen dazu, dass sich relativ gleichmäßige Schichtdicken der Lacke auch auf kompliziert geformten Objekten erzielen lassen. Man bezeichnet das Verhältnis der Schichtdicke von Innen- und Außenbereichen kompliziert geformter Körper als Umgriff. Das Umgriffverhalten wird in speziellen Prüfanordnungen getestet, im Rahmen der vorliegenden Erfindung nach dem BMW-Umgriff nach VDA 621-180. Siehe hierzu: A. Goldschmidt und H.-J. Streitberger, BASF-Handbuch Lackiertechnik, BASF Coatings AG, Vincentz Verlag, Hannover, 2002, Seiten 504 - 507**.**

"Alkyl" bezeichnet im Rahmen der vorliegenden Erfindung eine geradkettige oder verzweigte gesättigte Kohlenwasserstoffgruppe. Wird beispielsweise eine Alkylgruppe oder Polyalkylengruppe mit 1 bis 4 Kohlenstoffatomen eingesetzt, kann diese als eine "Niederalkylgruppe" bezeichnet werden und vorzugsweise Methyl (Me), Ethyl (Et), Propyl, insbesondere n-Propyl und iso-Propyl, Butyl, insbesondere n-Butyl, iso-Butyl, sec-Butyl, tert.-Butyl, umfassen.

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau. Siehe auch https://de.wikipedia.org/wiki/Compoundierung.

Die im Rahmen dieser Anmeldung genannten Normen beziehen sich auf die zum Anmeldetag dieser Erfindung geltenden Fassung.

### Komponente A)

Das erfindungsgemäß als Komponente A) einzusetzende Polyalkylenterephthalat, auch als Polyester bezeichnet, kann nach verschiedenen Verfahren hergestellt werden, aus unterschiedlichen Bausteinen synthetisiert werden, und im speziellen Anwendungsfall allein oder in Kombination mit Verarbeitungshilfsmitteln, Stabilisatoren, polymeren Legierungspartnern, vorzugsweise Elastomeren, oder auch Verstärkungsmaterialien, vorzugsweise mineralischen Füllstoffen oder insbesondere Glasfasern, und gegebenenfalls weiteren Additiven, zu Werkstoffen mit speziell eingestellten Eigenschaftskombinationen ausgerüstet werden. Erfindungsgemäß geeignet und deshalb mit dem Begriff "Polyalkylenterephthalat" umfasst sind auch Blends mit Anteilen von anderen Polymeren, wobei gegebenenfalls ein oder mehrere Kompatibilisatoren eingesetzt werden können.

Vorzugsweise wird Polybutylenterephthalat (PBT) [CAS Nr. 24968-12-5] eingesetzt, das wiederum aus Terephthalsäure (oder ihren reaktionsfähigen Derivaten) und Butandiol nach bekannten Methoden hergestellt wird (Kunststoff-Handbuch, Bd. VIII, S. 695 ff, Karl Hanser Verlag, München 1973).PBT wird unter der Marke Pocan® u. a. von der Lanxess Deutschland GmbH, Köln, vertrieben.

In einer Ausführungsform wird bevorzugt Polyethylenterephthalat (PET) [CAS Nr. 25038-59-9] eingesetzt, das aus Ethylenglykol und Terephthalsäure hergestellt wird. In einer Ausführungsform wird bevorzugt Polycyclohexylendimethylenterephthalat (PCT) [CAS Nr. 25037-99-4] eingesetzt, das aus 1,4-Cyclohexandimethanol und Terephthalsäuredimethylester hergestellt wird, erhältlich unter der Bezeichnung ThermX® bei der Celanese Corp., Dallas, Texas, USA.

In einer Ausführungsform werden als Komponente A) Polyalkylenfuranoate, bevorzugt Polyethylenefuranoat (PEF) oder Polypropylenefuranoat (PPF), eingesetzt. Polyalkylenfuranoate werden aus Recyclingprozessen gewonnen, indem 2,5-Furandicarbonsäure [CAS Nr. 3238-40-2] mit Glykolen, vorzugsweise Ethylenglykol oder Propylenglykol, polymerisiert wird. Als Edukt zur Herstellung der 2,5-Furandicarbonsäure dient Hydroxymethylfurfural(HMF); Avantium, Amsterdam, The Netherlands. Siehe auch: BioPla Journal, No. 59, 2015, Seiten 12- 17**.**

Bevorzugt enthalten die als Komponente A) einzusetzenden Polyalkylenterephthalate mindestens 80 Mol-%, vorzugsweise mindestens 90 Mol-%, bezogen auf die Dicarbonsäure, Terephthalsäurereste.

Das erfindungsgemäß als Komponente A) einzusetzende Polyalkylenterephthalat kann in einer Ausführungsform neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure, 2,5-Furandicarbonsäure.

Das erfindungsgemäß als Komponente A) bevorzugt einzusetzende Polyalkylenterephthalat kann in einer Ausführungsform neben der eigentlichen Diolkomponente bis zu 20 Mol-% andere aliphatische Diole mit 3 bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 1,4-Cyclohexandimethanol, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan.

Bevorzugt als Komponente A) einzusetzende Polyalkylenterephthalate haben eine intrinsische Viskosität nach EN-ISO 1628/5 im Bereich von 30 bis 150 cm³/g, besonders bevorzugt im Bereich von 40 bis 130 cm³/g, ganz besonders bevorzugt im Bereich von 50 bis 100 cm³/g, jeweils gemessen im Ubbelohde Viskosimeter in Phenol/o-Dichlorbenzol (1:1 Gew.-Teile) bei 25°C. Die intrinsische Viskosität iV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (Ameisensäure, m-Kresol, Tetrachlorethan, Phenol, 1,2-Dichlorbenzol, etc.) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Siehe hierzu auch: http://de.wikipedia.org/wiki/Viskosimetrie und "http://de.wikipedia.org/wiki/Mark-Houwink-Gleichung".

Das erfïndungsgemäß bevorzugt als Komponente A) einzusetzende PBT kann auch im Gemisch mit anderen Polymeren eingesetzt werden. Die Herstellung erfindungsgemäß einzusetzender PBT Blends erfolgt durch Compoundieren. Während einer solchen Compoundierung können zudem übliche Additive, insbesondere Entformungsmittel oder Elastomere der Schmelze zugemischt werden, wodurch die Eigenschaften der Blends verbessert werden.

Erfindungsgemäß bevorzugt einzusetzendes PBT kann als Pocan® B 1300 von der Lanxess Deutschland GmbH, Köln, bezogen werden. Erfindungsgemäß einzusetzendes PET kann als Rynite®PET von der E.I. du Pont de Nemours and Company / DuPont de Nemours (Deutschland) GmbH, Neu Isenburg, bezogen werden.

### Komponente B)

Als Komponente B) enthalten erfindungsgemäße Zusammensetzungen wenigstens einen Füll- oder Verstärkungsstoff. Vorzugsweise werden auf 100 Massenanteile der Komponente A) Füll- oder Verstärkungsstoffe in Mengen im Bereich von 1 bis 55 Massenanteilen eingesetzt.

Vorzugsweise wird wenigstens ein Füll- oder Verstärkungsstoff aus der Reihe Glimmer, Silikat, Quarz, insbesondere Quarzmehl, Talkum [CAS Nr. 14807-96-6], Titandioxid, amorphe Kieselsäuren, Bariumsulfat, Glaskugeln, Glasmehl und/oder faserförmige Füllstoffe und/oder Verstärkungsstoffe auf der Basis von Glasfasern oder Kohlenstofffasern eingesetzt.

Besonders bevorzugt werden Glaskugeln oder Glasmehl eingesetzt, ganz besonders bevorzugt Glaskugeln. Im Falle des Einsatzes von Glaskugeln beziehen sich Angaben zur Teilchengrößenverteilung bzw. der Teilchengrößen auf sogenannte oberflächenbasierte Teilchengrößen, jeweils vor Einarbeitung in die thermoplastische Formmasse. Hierbei werden die Durchmesser der Flächen der jeweiligen Glaspartikel mit den Flächen imaginärer sphärischer Teilchen (Kugeln) in Beziehung gesetzt. Dies geschieht vorzugsweise mit einem nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande).

Alle als Komponente B) einzusetzenden Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe.

Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der
d50-Wert diejenige Partikelgröße ist, unterhalb derer 50% der Partikelmenge liegen (Medianwert) und der
d97-Wert diejenige Partikelgröße ist, unterhalb derer 97% der Partikelmenge liegen.

Die Füll- und Verstärkungsstoffe können einzeln oder als Mischung aus zwei oder mehr unterschiedlichen Füllstoffen und/oder Verstärkungsstoffen eingesetzt werden.

Der als Komponente B) einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Epoxidbasis oder Silanbasis. Die Vorbehandlung ist jedoch nicht unbedingt erforderlich.

In einer besonders bevorzugten Ausführungsform werden als Komponente B) sphärische Glaskugeln, sogenanntes Spheriglas, eingesetzt.

Die als Komponente B) einzusetzenden Füll- und/oder Verstärkungsstoffe, insbesondere Glaskugeln oder Glasfasern, werden bevorzugt mit einem geeigneten Schlichtesystem, besonders bevorzugt auf Silanbasis, ausgerüstet.

Ganz besonders bevorzugte Haftvermittler auf Silanbasis für die Vorbehandlung sind Silanverbindungen der allgemeinen Formel (I)

(X-(CH₂)_{q})ₖ-Si-(O-CᵣH₂ᵣ₊₁)₄₋ₖ (I)

in der die Substituenten folgende Bedeutung haben:
- X:: NH₂-, HO-,

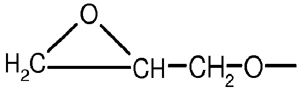

- q:: eine ganze Zahl von 2 bis 10, bevorzugt 3 bis 4,
- r:: eine ganze Zahl von 1 bis 5, bevorzugt 1 bis 2,
- k:: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füll- und/oder Verstärkungsstoffe, insbesondere Glaskugeln oder Glasfasern, werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf den Füll- bzw. Verstärkungsstoff zur Oberflächenbeschichtung eingesetzt.

Erfindungsgemäß bevorzugt einzusetzende Glaskugeln können als Spheriglass® 3000 CP02 von Potters Industries LLC, Valley Forge, PA 19482, USA, bezogen werden.

### Komponente C)

Als Komponente C) werden sekundäre Alkansulfonate (SAS) mit zwei Alkylresten eingesetzt. Vorzugsweise werden als Komponente C) Natriumsalze sekundärer Alkansulfonate (SAS) mit zwei Alkylresten eingesetzt. Sulfonsäuren, bei denen die Restgruppe R aliphatisch ist, bezeichnet man als Alkansulfonsäuren und deren Salze und Ester als Alkylsulfonate oder auch als Alkansulfonate. Erfindungsgemäß als Komponente C) einzusetzende sekundäre Alkansulfonate zeichnen sich durch ein sekundäres C Atom aus, das neben dem Sulfonat zwei Alkylreste - und damit keinen aromatischen Rest wie im oben beschriebenen Stand der Technik - trägt.

SAS [CAS Nr. 97489-15-1] sind besonders in Europa eine wirtschaftlich wichtige Gruppe von anionischen Tensiden und sind charakterisiert durch ein Isomeren- und Homologengemisch der allgemeinen Formel (II)

R¹-HC(SO₃Na)-R² (II)

worin R¹ und R² unabhängig voneinander jeweils für einen C₁₀ bis C₂₁ Alkylrest stehen. Besonders bevorzugt sind Natriumsalze der Alkansulfonsäure der Formel (II) worin R¹ und R² unabhängig voneinander jeweils für C₁₆ - C₁₈ Alkylreste stehen.

SAS erhält man durch Sulfoxidation oder Sulfochlorierung von geradkettigen Paraffinen mit anschließender Neutralisation bzw. Verseifung der Sulfochloride mittels Natronlauge. SAS sind biologisch sehr gut abbaubar und werden bisher überwiegend in Geschirrspülmitteln, Haushaltsreinigern, aber auch in Körperpflegemitteln, bei der Emulsionspolymerisation oder in Feuerlöschmitteln angewendet. Für SAS, die unter der Marke Mersolat® von der Lanxess Deutschland GmbH, Köln, vertrieben werden, ist auch die Bezeichnung (C₁₀-C₂₁)Alkylsulfonsäureester üblich. Siehe auch https://de.wikipedia.org/wiki/Sulfons%C3%A4uren Erfindungsgemäß insbesondere bevorzugt wird als Komponente C) Mersolat® H95, SDB Nr. 011693, Natriumalkansulfonate [CAS Nr. 68188-18-1], erhältlich von der Lanxess Deutschland GmbH, Köln, eingesetzt.

Vorzugsweise werden SAS in Mengen im Bereich von 0.5 bis 20 Massenanteilen bezogen auf 100 Massenanteile der Komponente A) eingesetzt. Erfindungsgemäß bevorzugt einzusetzendes SAS kann beispielsweise bei der Lanxess Deutschland GmbH, Köln, als Mersolat® H95 bezogen werden.

### Komponente D)

In einer bevorzugten Ausführungsform wird zusätzlich zu den Komponenten A), B) und C) noch Komponente D) wenigstens ein Copolymerisat aus mindestens einem α-Olefin mit mindestens einem Methacrylsäurester oder Acrylsäureester eines aliphatischen C₁ - C₂₀ Alkohols eingesetzt. Besonders bevorzugt sind dabei Copolymerisate, bei denen das α-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt wird Ethen als α-Olefin eingesetzt. Ganz besonders bevorzugt wird ein Copolymerisat aus Ethen und aus einem Acrylsäureester als Komponente D) eingesetzt. Insbesondere bevorzugt ist ein Copolymerisat nur aus Ethen und nur aus einem Acrylsäureester. Insbesondere ganz besonders bevorzugt ist ein Copolymerisat nur aus Ethen und nur aus Acrylsäure-(2-ethyl)-hexylester. Erfindungsgemäß als Komponente D) einzusetzende Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16 kg von mindestens 100 g / 10 min, bevorzugt von mindestens 150 g / 10 min, besonders bevorzugt von mindestens 300g/10min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Vorzugsweise wird Komponente D) in Mengen im Bereich von 1 bis 15 Massenanteilen bezogen auf 100 Massenanteile der Komponente A) eingesetzt.

### Komponente E)

In einer bevorzugten Ausführungsform wird zusätzlich zu den Komponenten A), B), C) und D) oder anstelle von D) noch Komponente E) wenigstens ein **Elastomermodifikator** eingesetzt. Vorzugsweise wird die Komponente E) in Mengen im Bereich von 1 bis 35 Massenanteilen bezogen auf 100 Massenanteile der Komponente A) eingesetzt.

Bevorzugt als Komponente E) einzusetzende Elastomermodifikatoren umfassen u. a. ein oder mehrere Pfropfpolymerisate von
E.1 5 bis 95 Gew.-%, vorzugsweise 30 bis 90 Gew.-%, wenigstens eines Vinylmonomeren auf
E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C, wobei sich die Gew.-% auf 100 Gew.-% Propfpolymerisat E) beziehen.

Die Pfropfgrundlage E.2 hat im allgemeinen eine mittlere Teilchengröße (d50-Wert) im Bereich von 0,05 bis 10 µm, vorzugsweise im Bereich von 0,1 bis 5 µm, besonders bevorzugt im Bereich von 0,2 bis 1 µm.

Monomere E.1 sind vorzugsweise Gemische aus
E.1.1 50 bis 99 Gew.-% Vinylaromaten und/oder kernsubstituierten Vinylaromaten, insbesondere Styrol, α-Methylstyrol, p-Methylstyrol, p-Chlorstyrol, und/oder Meth-acrylsäure-(C₁-C₈)-Alkylester, insbesondere Methylmethacrylat, Ethylmethacrylat und
E.1.2 1 bis 50 Gew.-% Vinylcyanide, insbesondere ungesättigte Nitrile wie Acrylnitril und Methacrylnitril, und/oder (Meth)Acrylsäure-(C₁-C₈)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid, wobei sich die Gew.-% auf 100 Gew.-% Monomer E.1 beziehen.

Bevorzugte Monomere E.1.1 sind ausgewählt aus mindestens einem der Monomere Styrol, α-Methylstyrol und Methylmethacrylat, bevorzugte Monomere F.1.2 sind ausgewählt aus mindestens einem der Monomere Acrylnitril, Maleinsäureanhydrid, Glycidylmethacrylat und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse-und Suspensions-ABS) wobei ABS für Acrylnitril-Butadien-Styrol steht, wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff**.** beschrieben sind. Der Gelanteil der Pfropfgrundlage E.2 beträgt bevorzugt mindestens 30 Gew.-%, besonders bevorzugt mindestens 40 Gew.-% (in Toluol gemessen) bezogen auf 100 Gew.-% der Pfropfgrundlage E.2. Ganz besonders bevorzugt ist ein Kautschuk auf Basis eines Acrylnitril-Butadien-Sytrol-Copolymerisats.

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören C₁-C₈-Alkylester, vorzugsweise Methyl-, Ethyl-, Butyl-, n-Octyl- und 2-Ethylhexylester; Halogenalkylester, vorzugsweise Halogen-C₁-C₈-alkyl-ester, vorzugsweise Chlorethylacrylat, Glycidylester sowie Mischungen dieser Monomeren. Dabei sind Propfpolymerisate mit Butylacrylat als Kern und Methylmethacrylaten als Schale, besonders bevorzugt.

Weitere bevorzugt geeignete Pfropfgrundlagen gemäß E.2 sind Silikonkautschuke mit pfropfaktiven Stellen, wie sie in DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf 100 Gew.-% der Pfropfgrundlage E.2.

Bei cyclischen vernetzenden Monomeren mit mindestens 3 ethylenisch ungesättigten Gruppen ist es vorteilhaft, die Menge auf unter 1 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, α-Methylstyrol, Acrylamide, Vinyl-C₁-C₆-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen, bezogen auf 100 Gew.-% E.2.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM-und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

### Komponente F)

In einer bevorzugten Ausführungsform wird zusätzlich zu den Komponenten A), B), C), D) und E) oder anstelle von D) oder anstelle von E) noch Komponente F) wenigstens ein **weiteres Additiv** eingesetzt, mit der Maßgabe, dass F) verschieden von A), B), C), D) oder E) ist. Vorzugsweise wird die Komponente F) in Mengen im Bereich von 0,1 bis 20 Massenanteilen bezogen auf 100 Massenanteile der Komponente A) eingesetzt.

Bevorzugte weitere Additive im Sinne der vorliegenden Erfindung sind UV-Stabilisatoren, Thermostabilisatoren, Gleit- und Entformungsmittel, von Komponente B) verschiedene Füll- und Verstärkungsstoffe, Nukleierungsmittel, Laserabsorber, di- oder mehrfunktionelle verzweigend oder kettenverlängernd wirkende Additive, Hydrolysestabilisatoren, Antistatika, Emulgatoren, Weichmacher, Verarbeitungshilfsmittel, Fließhilfsmittel, von Komponente E) verschiedene Elastomermodifikatoren und Farbmittel. Die Additive können jeweils alleine oder in Mischung bzw. in Form von Masterbatchen eingesetzt werden.

Als **Gleit- und Entformungsmittel** werden bevorzugt solche aus der Reihe der langkettigen Fettsäuren, der Salze langkettiger Fettsäuren, der Esterderivate langkettiger Fettsäuren sowie Montanwachse ausgewählt.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere C₁₆-C₁₈ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel, ganz besonders bevorzugt ist und Pentaerythritoltetrastearat [CAS-Nr. 115-83-3] z. B. erhältlich als Loxiol® P861 der Fa. Emery Oleochemicals GmbH, Düsseldorf, Deutschland, insbesondere ganz besonders bevorzugt ist.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid und/oder Bariumsulfat, Ultramarinblau, Eisenoxid, Zinksulfid oder Ruß eingesetzt.

Bevorzugt als Komponente F) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Als **Nukleierungsmittel** werden bevorzugt Natrium und Kalium Salze des Acetats, Salicylats, Steareats, Saccharinats, sowie teilverseifte Montanwachse und Ionomeren sowie ganz besonders bevorzugt Talkum, sofern nicht bereits als Komponente B) vorhanden, eingesetzt, wobei diese Aufzählung nicht abschließend ist.

Als Komponente F) bevorzugt einzusetzende **Thermostabilisatoren** sind ausgewählt aus der Gruppe der sterisch gehinderten Phenole und aliphatisch oder aromatisch substituierten Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS-Nr. 35074-77-2] (Irganox® 259 der Fa. BASF SE, Ludwigshafen, Deutschland), Pentaerythritol-tetrakis-[3-(3,5-di-tert.-butyl-4-hydroxyphenyl)-propionat] [CAS-Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS-Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Tetrakis(2,4-di-tert-butylphenyl)-4,4-biphenyldiphosphonit [CAS Nr. 119345-01-6], das z. B. von der Firma Clariant International Ltd, Muttenz, Schweiz als Hostanox® P-EPQ angeboten wird, Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird, und/oder Tetrakis(2,4-di-tert-butylphenyl)-1,1-biphenyl-4,4'-diylbisphosphonit [CAS Nr. 38613-77-3], eingesetzt.

Die vorliegende Erfindung betrifft aber auch ein Stoffgemisch enthaltend wenigstens ein Copolymerisat aus mindestens einem α-Olefin mit mindestens einem Acrylsäureester eines aliphatischen C₁ - C₂₀ Alkohols und wenigstens eine Verbindung der Formel R¹-HC(SO₃Na)-R², worin R¹ und R² jeweils unabhängig voneinander für einen C₁₀ - C₂₁ Alkylrest stehen.

Die Erfindung betrifft aber auch die Verwendung des Stoffgemisches enthaltend wenigstens ein Copolymerisat aus mindestens einem α-Olefin mit mindestens einem Acrylsäureester eines aliphatischen C₁ - C₂₀ Alkohols und wenigstens eine Verbindung der Formel R¹-HC(SO₃Na)-R², worin R¹ und R² jeweils unabhängig voneinander für einen C₁₀ - C₂₁ Alkylrest stehen, zur Verbesserung der Lackiereigenschaften Polyalkylenterephthalat oder Polyalkylenfuranoat basierter Erzeugnisse. Vorzugsweise betrifft die Erfindung das Stoffgemisch enthaltend ein Copolymerisat nur aus Ethen, und nur aus Acrylsäure-2-ethylhexylester und wenigstens eine Verbindung der Formel R¹-HC(SO₃Na)-R², worin R¹ und R² jeweils unabhängig voneinander für einen C₁₀ - C₂₁ Alkylrest stehen.

In bevorzugter Ausführungsform betrifft die vorliegende Erfindung Zusammensetzungen und daraus herzustellende Formmassen sowie Erzeugnisse enthaltend A) Polybutylenterephthalat, B) Glaskugeln und C) wenigstens eine Verbindung der Formel R¹-HC(SO₃Na)-R², worin R¹ und R² jeweils unabhängig voneinander für einen C₁₀ - C₂₁ Alkylrest stehen.

In bevorzugter Ausführungsform betrifft die vorliegende Erfindung Zusammensetzungen und daraus herzustellende Formmassen sowie Erzeugnisse enthaltend A) Polybutylenterephthalat, B) Glaskugeln, C) wenigstens eine Verbindung der Formel R¹-HC(SO₃Na)-R², worin R¹ und R² jeweils unabhängig voneinander für einen C₁₀ - C₂₁ Alkylrest stehen und Kautschuk auf Basis eines Acrylnitril-Butadien-Styrol Copolymers.

In bevorzugter Ausführungsform betrifft die vorliegende Erfindung Zusammensetzungen und daraus herzustellende Formmassen sowie Erzeugnisse enthaltend A) Polyethylenterephthalat, B) Glaskugeln und C) wenigstens eine Verbindung der Formel R¹-HC(SO₃Na)-R², worin R¹ und R² jeweils unabhängig voneinander für einen C₁₀ - C₂₁ Alkylrest stehen.

In bevorzugter Ausführungsform betrifft die vorliegende Erfindung Zusammensetzungen und daraus herzustellende Formmassen sowie Erzeugnisse enthaltend A) Polyethylenterephthalat, B) Glaskugeln, C) wenigstens eine Verbindung der Formel R¹-HC(SO₃Na)-R², worin R¹ und R² jeweils unabhängig voneinander für einen C₁₀ - C₂₁ Alkylrest stehen. und wenigstens einen Kautschuk auf Basis eines Acrylnitril-Butadien-Styrol Copolymers.

In bevorzugter Ausführungsform betrifft die vorliegende Erfindung Zusammensetzungen und daraus herzustellende Formmassen sowie Erzeugnisse enthaltend A) Polybutylenterephthalat, B) Glaskugeln und C) wenigstens eine Verbindung der Formel R¹-HC(SO₃Na)-R², worin R¹ und R² jeweils unabhängig voneinander für einen C₁₀ - C₂₁ Alkylrest stehen. sowie F) Talkum und/oder wenigstens ein Copolmerisat aus Ethen und Acrylsäure-(2-ethyl)-hexylester.

### Verwendung

Die vorliegende Erfindung betrifft aber auch die Verwendung der erfindungsgemäßen Zusammensetzungen, insbesondere in Form von Formmassen, zur Herstellung von Erzeugnissen, vorzugsweise lackierfähiger Erzeugnisse, besonders bevorzugt von Erzeugnissen, die einem elektrostatischen Spritzverfahren (ESTA) unterzogen werden.

### Lackieren

Lackieren kann als das bedeutendste Verfahren zum Auftrag eines Überzugs an industriellen Produktionsgütern angesehen werden. Für den industriellen Einsatz wurden deshalb die unterschiedlichsten Lackierverfahren entwickelt. Mit weitgehend automatisierten Anlagen lassen sich auch Teile in hohen Stückzahlen durch Sprühen, Gießen, Walzen oder Tauchen schnell und gleichmäßig beschichten. Erfindungsgemäß werden die Lackierverfahren aus der Gruppe Niederdruckspritzen, Druckluftspritzen, Höchstdruckspritzen, Heißspritzen, elektrostatisches Spritzen, Tauchlackieren, Gießen und Walzen umfasst.

### Zusammensetzung von Lacken

Anstrichstoffe und Lacke sind Mischungen aus Bindemitteln, Pigmenten, Lösungs- und Verdünnungsmitteln, Füllstoffen sowie Zusatzstoffen. Bindemittel haben die Aufgabe, die Pigmentteilchen untereinander und mit dem zu lackierenden Untergrund zu verbinden. Pigmente sind im Anwendungsmedium praktisch unlösliche, anorganische oder organische, bunte oder unbunte Farbmittel. Löse- und Verdünnungsmittel (z. B. Benzin oder Terpentinöl) sind eine aus einer oder mehreren Komponenten bestehende Flüssigkeit, die das Bindemittel ohne chemische Umsetzung zu lösen vermag. Dadurch wird dem Lack die zum Verarbeiten erforderliche Viskosität gegeben. Füllstoffe sind pulverförmige, im Anwendungsmedium praktisch unlösliche Substanzen, die zum Verändern des Volumens, zum Erzielen oder Verbessern technischer Aspekte und/oder Beeinflussen optischer Eigenschaften dienen. Zusatzstoffe sind u. a. Weichmacher, Trocknungsstoffe, Härter, Netzmittel sowie Mattierungsstoffe. Weichmacher sind wichtige Bestandteile für Lacke, die nachträglich auf umzuformende Teile aufgebracht werden. Härter sind Bestandteile von kratzfesten Lacken.

### Vorbehandlung der Werkstückoberflächen

Die Oberflächen der zu lackierenden Erzeugnisse müssen zumeist vor einer organischen Beschichtung behandelt werden, um eine gute Haftung der Lackschicht auf dem Untergrund, einen störungsfreien Beschichtungsprozess, eine gleichmäßige Ausbildung des Lackfilms sowie eine erhöhte Beständigkeit gegenüber Umwelteinflüssen zu gewährleisten. Bei den Vorbehandlungsverfahren unterscheidet man zwischen mechanischen und chemischen Verfahren.

### Lackierverfahren

Beim Spritzen bzw. Sprühen werden Flüssigkeiten zerstäubt. Dies kann mit Hilfe verschiedener physikalischer Effekte erfolgen. In der Lackiertechnik werden zwei Zerstäubungsprinzipien, die Zerstäubung durch mechanische Kräfte (= Spritzverfahren) und die Zerstäubung durch elektrische Kräfte (= Sprühverfahren) eingesetzt.

Der Wirkungsgrad der verschiedenen Spritzverfahren differiert erheblich. Der vorbeigespritze oder abgelenkte Spritzstrahl wird als Overspray bezeichnet und kann durch erhebliche Lackverluste zu einer schlechten Wirtschaftlichkeit des Verfahrens und zur Verschmutzung der Umwelt führen. Für Hand- und Automatikspritzpistolen zum Lackieren werden viele verschiedene Düsenformen wie die Hohlkegel-Exzenterdüse, die Axial-Vollkegeldüse, die Helix-Hohlkegeldüse, die Bündeldüse, der pneumatische Zerstäuber mit Außenmischung oder der Überschall-Pneumatik-Zerstäuber mit Innenmischung angeboten. Zum Lackauftrag werden im Allgemeinen Zerstäuberdüsen eingesetzt, die die zu überstreichende Fläche voll ausfüllen. Ein Schnitt durch einen pneumatischen Zerstäuber zeigt, dass in ihm die Zerteilung des Lackes in Tropfen, wie auch der Weitertransport, durch an verschiedenen Positionen austretende Luftströme bewirkt wird. Man nennt Düsen, die mit Gas und Flüssigkeit arbeiten, Zweistoffdüsen.

Im Folgenden werden die gebräuchlichsten Lackierverfahren kurz vorgestellt und charakterisiert.

**Niederdruckspritzen:** Dieses Verfahren erfolgt mit speziellen Niederdruckspritzgeräten ("elektr. Spritzpistolen"), die mit einem Spritzdruck von 0,2 - 0,5 bar arbeiten. Hierbei wird die Luft nicht wie beim Druckluftspritzen zusammengepresst, sondern von einem Rotationsgebläse, ohne Zwischenschalten eines Windkessels, sofort zur Pistole geführt. Allgemein wird das Verfahren dort angewendet, wo keine hohen Ansprüche an die Optik der Beschichtung gestellt werden. Es eignet sich zum Verarbeiten dünner oder stark verdünnter Lacke.

Beim **Druckluftspritzen** erfolgen die Verteilung und der Auftrag des Beschichtungsstoffes durch Druckluft (1 bis 5 bar), die frei von Wasser und Öl sein muss. Dazu dienen Spritzpistolen, in denen die Druckluft mit hoher Geschwindigkeit strömt. Mittels eines Düsensystems wird der Beschichtungsstoff angesaugt und in einem Sprühkegel zerstäubt, der den jeweiligen Erfordernissen angepasst werden kann. Das Druckluftspritzen gestattet es, ziemlich hochviskose, pigmentreiche und lösemittelarme Beschichtungsstoffe zu verspritzen.

**Höchstdruckspritzen (Airless-Spritzen):** Bei diesem Verfahren wird der Beschichtungsstoff hydraulisch ohne Luftbeimengung unter einem Druck von etwa 100 bis 400 bar durch die Spritzdüse gedrückt. Erzeugt wird dieser hohe Druck von einer druckluft- oder elektrisch betriebenen Kolbenpumpe. Das Zerstäuben erfolgt beim Verlassen der Düse. Durch die rasche Expansion in Kombination mit dem Luftwiderstand und dem mechanischen Widerstand entstehen sehr kleine Tropfen. Der Strahl des Beschichtungsstoffes ist frei von Luft. Die der Pistole zugeführte Luft dient der Servosteuerung der Nadel oder zum Sauberblasen. Aufgrund der hohen Durchflussmengen eignet sich das Verfahren für große zusammenhängende Flächen.

Durch **Heißspritzen** lassen sich aufgrund der Viskositätserniedrigung des Lackes mit zunehmender Temperatur problemlos hochviskose, lösemittelarme Lacke verarbeiten. Dies kann durch Druckluftzerstäubung bzw. Airlesszerstäubung mit oder ohne Luftunterstützung erfolgen. Das Erwärmen des Materials auf ca. 55 bis 70° C erfolgt direkt im Becher der Pistole bzw. über Wärmetauscher mit Heißwasser- oder Heißlackumlaufsystem. Heißspritzen ermöglicht hohe Einzelschichtdicken und wird oft in Verbindung mit dem Hochdruckspritzen angewendet.

**Elektrostatisches Spritzen (ESTA):** Zwischen dem zu lackierenden Erzeugnis und Spritzpistole liegt eine Gleichspannung von 30 kV bis 50 kV an, die zum Ausbilden eines starken elektrischen Feldes führt. Sobald der Beschichtungsstoff, vorzugsweise Nasslack (elektrostatische Nasslacklackierung) oder Pulverlack (elektrostatische Pulverlackierung), die Pistolenmündung verlässt, wird er elektrisch aufgeladen und folgt wie magnetisch angezogen den Feldlinien. Da die Beschichtungsstoffteilchen gleichpolig geladen sind, stoßen sie sich im Flug ab, und es entsteht ein homogen versprühter Strahl. Ebenso gleichmäßig schlagen sich die Partikel auf der Oberfläche nieder. Auch Teilchen, die normalerweise vorbeifliegen würden, werden aufgrund der großen Anziehungskraft umgelenkt und zum Werkstück hin beschleunigt.

Erfolgt die Zerstäubung mechanisch, vorzugsweise durch Druckluftspritzen, Airless-Spritzen oder durch Rotationszerstäuber, so spricht man von einer elektrostatisch unterstützten Lackierung. Dabei kann die Aufladung innerhalb (Innenaufladung) oder außerhalb (Außenaufladung) des Sprühorgans erfolgen (siehe auch Corona-Aufladung). Da die Lackpartikel weitgehend dem elektrischen Feldlinienverlauf zwischen Ladeelektrode (Zerstäuber) und Gegenelektrode (geerdetes Werkstück) folgen, arbeitet man bei der elektrostatisch unterstützten Lackierung von Nasslacken mit einem erhöhten Auftragswirkungsgrad im Vergleich zu den nicht elektrostatisch unterstützten Verfahren. Die Lackierfähigkeit ESTA lackierter Erzeugnisse wird wie bereits oben beschrieben durch den sogenannten Umgriff bewertet.

Beim **Tauchlackieren** werden die zu lackierenden Erzeugnisse in den Lack eingetaucht und nachdem sie vollständig benetzt sind, wieder herausgezogen. Da die Erzeugnisse vollständig in den Lack getaucht werden, dürfen sie nicht aufschwimmen, d. h. sie müssen eine größere Dichte als der Lack aufweisen. Beim Eintauchen dürfen keine Luftblasen verbleiben, weil an diesen Stellen sonst kein Lack angenommen wird. Beim Austauchen darf kein Lack mit dem lackierten Erzeugnis ausgeschöpft werden, da größere Lackmengen nur ungenügend aushärten. Auch müssen die zu lackierenden Erzeugnisse vor dem Lackieren vollständig sauber sein! Tauchlackieren eignet sich zum Aufbringen von Grundier- oder Deckschichten mit niedrigen Anforderungen (z. B. bei landwirtschaftlichen Maschinen).

**Gießen:** Bei Gießmaschinen handelt es sich um große Tische, deren Fläche aus Rollen oder Förderbändern besteht, die den zu lackierenden Gegenstand mit variierbarer Geschwindigkeit durch den Lackiervorgang transportieren. Der Lack wird dazu mit einer Förderpumpe aus einem Vorratsbehälter in den sogenannten Gießkopf gepumpt. Dies ist ein sich über die ganze Breite der Förderanlange erstreckendes Gefäß mit einem verstellbaren Spalt an der Unterseite durch den der Anstrichstoff in einem breiten kontinuierlichen Farbvorhang senkrecht nach unten bzw. auf das Werkstück läuft.

Angewendet wird das Gießverfahren vor allem bei flachen oder gewölbten, sehr großen Gegenständen, die mit dem Walzverfahren nicht lackierbar sind.

Beim **Walzen** wird das Beschichtungsmaterial von rotierenden Gummiwalzen auf die Werkstückoberfläche übertragen. Über einen verstellbaren Spalt zwischen Auftragswalze und Dosierwalze lassen sich die gewünschten Lackauftragsmengen einstellen. Die Werkstückoberflächen können sowohl ein- als auch beidseitig beschichtet werden. Beim Gleichlaufwalzen bewegen sich Werkstück und Lackierwalzen in gleicher Richtung, beim Reservewalzen entgegengesetzt. Mit dem Walzen werden Metallbänder, Möbelteile, Bleche, Konservendosen und Eimer lackiert.

Die vorliegende Erfindung betrifft die Verwendung von Erzeugnissen enthaltend die erfindungsgemäßen Zusammensetzungen in wenigstens einem der aufgelisteten Lackierverfahren, vorzugsweise im elektrostatischen Spritzverfahren (ESTA).

Die vorliegende Erfindung betrifft zudem die Verwendung lackierter Erzeugnisse enthaltend die erfindungsgemäßen Zusammensetzungen in der Kraftfahrzeugindustrie, vorzugsweise als Karosserieteile in Kraftfahrzeugen, besonders bevorzugt als Kotflügel, Stoßfänger, Spoiler, Gehäuse oder Tankdeckel bzw. Tankklappen.

### Herstellverfahren

Die vorliegende Erfindung betrifft auch ein Verfahren zur Herstellung von Erzeugnissen, indem man die einzelnen Komponenten der erfindungsgemäßen Zusammensetzungen zu einer Formmasse vermischt, diese in Form eines Strangs austrägt, bis zur Granulierfähigkeit abkühlt und granuliert und einem Spritzguss unterzieht.

Vorzugsweise handelt es sich dabei um Erzeugnisse für die Kraftfahrzeugindustrie.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es dem Spritzguss zwecks Herstellung erfindungsgemäßer Erzeugnisse unterzogen und anschließend einem Lackierverfahren unterzogen wird.

Die Verfahren des Spritzgusses Polyalkylenterephthalat basierter Formmassen sind dem Fachmann bekannt.

Erfindungsgemäße Verfahren zur Herstellung von Polyalkylenterephthalat basierten Erzeugnissen durch Spritzguss arbeiten vorzugsweise bei Schmelzetemperaturen im Bereich von 240 bis 330°C, besonders bevorzugt im Bereich von 260 bis 300°C, ganz besonders bevorzugt im Bereich von 270 bis 290°C, sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet
1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer mindestens zwei Werkzeughälften. Beim Spritzguss unterscheidet man folgende Funktionskomplexe:
- Angusssystem
- Formbildende Einsätze
- Entlüftung
- Maschinen- und Kraftaufnahme
- Entformungssystem und Bewegungsübertragung
- Temperierung

### Beispiele

Zum Nachweis der überraschenderweise gefundenen Eigenschaften und der sich daraus ergebenden Möglichkeiten zur Lackierung von Erzeugnissen auf Basis der erfindungsgemäßen Zusammensetzungen wurden zunächst durch Compoundierung entsprechende Polyester Formmassen angefertigt. Die einzelnen Komponenten wurden hierzu in einem Zweiwellenextruder (ZSK 32 Mega Compounder der Fa. Coperion Werner & Pfleiderer (Stuttgart, Deutschland)) bei Temperaturen im Bereich von 260 bis 300°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in **Tabelle 1** aufgeführten Untersuchungen wurden auf einer Spritzgießmaschine bei einer Massetemperatur von 260°C und einer Werkzeugtemperatur von 80°C verspritzt:
- Rundplatten Durchmesser 80mm, Dicke 4 mm
- Europlatte: 300 mm x 15 mm x 3 mm

Jeder Versuch wurde anhand von 5 Prüfkörpern durchgeführt und dann der Mittelwert aus den Ergebnissen ermittelt.

### Lacktyp für Lackhaftung:

Grundierung: R1218; Basis Lack:R2342; Klarlack: R3209E. Die Lacke sind kommerziell erhältlich bei Karl Wörwag Lack- und Farbenfabrik GmbH & Co.KG, Stuttgart, Deutschland.

### Lackhaftung:

Gitterschnitt: Die Prüfung erfolgt analog ISO 2490: Eine Kennzeichnung mit "+" bedeutet hier einer Bewertung von GT0, d. h. es sind keine Ablösungen zu erkennen. Eine Bewertung mit "-" entspricht einer Bewertung von GT5, d. h. die abgeplatzte Fläche ist > 65%.

### Lacktyp für ESTA Lackierung:

Basis Lack:R2342; Klarlack: R3203HE. Die Lacke sind kommerziell erhältlich bei Karl Wörwag Lack- und Farbenfabrik GmbH & Co.KG, Stuttgart, Deutschland.

### In den Versuchen wurden verwendet:

Komponente A): Lineares Polybutylenterephthalat (Pocan® B 1300, Handelsprodukt der Lanxess Deutschland GmbH, Leverkusen, Deutschland) mit einer Intrinsischen Viskosität von 93 cm³/g (gemessen in Phenol : 1,2-Dichlorbenzol = 1:1 bei 25°C)
Komponente B): Spheriglass® 3000 CP02, Glaskugeln, Handelsprodukt der Potters Industries LLC, Valley Forge, PA 19482, USA
Komponente C): Mersolat® H95, SDB Nr. 011693, Natriumalkansulfonate [CAS Nr. 68188-18-1], erhältlich von der Lanxess Deutschland GmbH, Köln
Komponente D): Lotryl® EH 550, [CAS Nr. 26984-27-0],Copolymerisat aus Ethen und Acrylsäure-2-ethylhexylester, erhältlich bei Arkema, Puteaux, Frankreich
Komponente F): Weitere für die Verwendung in Polyestern gebräuchliche Additive wie zum Beispiel Entformungsmittel (z. B. Pentaerythritol-tetrastearat (PETS)), Thermostabilisatoren z. B. auf Basis von Phenylphosphiten wie Pentaerythritol-tetrakis-[3-(3,5-di-tert.-butyl-4-hydroxyphenyl)-propionat] [CAS-Nr. 6683-19-8] (Irganox® 1010 der Fa. BASF SE)) und Nukleierungsmittel z. B. Talkum, Mistron® R10, erhältlich bei der Imerys Talc Group, Toulouse, Frankreich. Art und Menge der als Komponente F) zusammengefassten Additive stimmen in Art und Menge für Beispiele und Vergleichsbeispiele überein.

Die Summe der Anteile der Komponenten ergänzt sich in Tabelle 1 jeweils zu 100 Gew. -%.

**Tabelle 1(alle Angaben in Gew.-%)**

| | **Beispiel 1** | **Beispiel 2** | **Vergl.- Beispiel 1** |
|---|---|---|---|
| **A)** | 72,8 | 68,8 | 75,8 |
| **B)** | 20,0 | 20,0 | 20,0 |
| **C)** | 3,0 | 7,0 | |
| **D)** | 4 | 4 | 4 |
| **F** | 0,2 | 0,2 | 0,2 |
| **Spez. Oberflächenwiderstand [Ohm]** | 4.22E+13 | 2.73E+11 | 5.12E+16 |
| **Umgriff bei ESTA Lackierung** | + | ++ | 0 |

Die Beispiele in Tabelle 1 zeigen, dass es bei einer Verwendung von Komponente C) gegenüber dem Vergleich ohne Komponente C) zu einer Verringerung des Oberflächenwiderstandes von 10³ bis 10⁵ Ohm kommt. Die dadurch steigende Oberflächenleitfähigkeit befähigt das Material dann im Vergleich zu einem Material ohne Komponente C) elektrostatisch lackiert zu werden. Dies lässt sich in der Praxis durch einen guten Umgriff des Lackes auf der von der Lackierpistole abgewandten Seite des Substrates zeigen. Materialien ohne Komponente C) zeigen hingegen keinen Umgriff. Dabei hat der Zusatz von Komponente C) keinen negativen Einfluss auf die mechanischen Eigenschaften, wie es von anderen Leitfähigkeitsadditiven, wie z. B. Ruß und Carbonanotubes (CNT), bekannt ist.

**Tabelle 2(alle Angaben in Gew.-%)**

| | **Beispiel 3** | **Vergl.-Beispiel 2** |
|---|---|---|
| **A)** | 70,8 | 75,8 |
| **B)** | 20,0 | 20,0 |
| **C)** | 5,0 | |
| **D)** | 4 | 4 |
| **F** | 0,2 | 0,2 |
| **Lackhaftung** | + | - |

Das Beispiel 3 in Tabelle 2 zeigt, dass sich Erzeugnisse auf Basis einer erfindungsgemäßen Formmasse mit einer Kombination der Komponenten C) +D) durch eine verbesserte Lackhaftung im Vergleich zu Erzeugnissen auf Basis einer Formmasse aus Vergleichsbeispiel 2 ohne Komponente C) auszeichnen.

Eine Kombination von PBT als Komponente A) mit den Komponenten B) und C) zeichnet sich zudem über eine hohe Temperaturbeständigkeit aus, so dass solche Materialien als Bestandteil einer Karosserie alle Schritte eines Lackierprozesses in üblicherweise angewandten Lackierstraßen, inklusive kathodische Tauchlackierung (KTL), durchlaufen können, ohne dass besondere Maßnahmen notwendig sind. Hierdurch können Zeit und Kosten eingespart werden. Schließlich zeichnen sich Erzeugnisse auf Basis erfindungsgemäßer Zusammensetzungen durch eine sehr geringe Wasseraufnahme aus, wodurch eine klimaunabhängige Formstabilität gewährleistet ist, die besonders bei Karosserieaußenteilen im Sichtfeld, wie z. B. Tankklappen, von hoher Bedeutung ist.

## Patentansprüche

1. Zusammensetzungen, **dadurch gekennzeichnet, dass** diese
A) wenigstens ein Polyalkylenterephthalat oder Polyalkylenfuranoat,
B) wenigstens einen Füll- oder Verstärkungsstoff und
C) wenigstens ein sekundäres Alkansulfonat mit zwei Alkylresten enthalten.

2. Zusammensetzungen gemäß Anspruch 1, **dadurch gekennzeichnet, dass** als Polyalkylenterephthalat Polybutylenterephthalat oder Polyethylenterephthalat eingesetzt wird, vorzugsweise Polybutylenterephthalat.

3. Zusammensetzungen gemäß Anspruch 1, **dadurch gekennzeichnet, dass** als Polyalkylenfuranoat Polyethylenfuranoat oder Polypropylenfuranoat eingesetzt wird.

4. Zusammensetzungen gemäß einem der Ansprüche 1 bis 3, **dadurch gekennzeichnet, dass** es sich bei Komponente C) um ein Isomeren- und Homologengemisch der allgemeinen Formel (II)
R¹-HC(SO₃Na)-R² (II)
handelt, worin R¹ und R² unabhängig voneinander jeweils für einen C₁₀ bis C₂₁ Alkylrest stehen.

5. Zusammensetzungen gemäß Anspruch 4, **dadurch gekennzeichnet, dass** R¹ und R² für C₁₆ - C₁₈ Alkylreste stehen.

6. Zusammensetzungen gemäß einem der Ansprüche 1 bis 5, **dadurch gekennzeichnet, dass** als Füll- oder Verstärkungsstoff wenigstens einer aus der Reihe Glimmer, Silikat, Quarz, insbesondere Quarzmehl, Talkum, Titandioxid, amorphe Kieselsäuren, Bariumsulfat, Glaskugeln, Glasmehl und/oder faserförmige Füllstoffe und/oder Verstärkungsstoffe auf der Basis von Glasfasern oder Kohlenstofffasern eingesetzt wird.

7. Zusammensetzungen gemäß Anspruch 6, **dadurch gekennzeichnet, dass** Glaskugeln oder Glasmehl eingesetzt werden, vorzugsweise Glaskugeln.

8. Zusammensetzungen gemäß einem der Ansprüche 1 bis 7, **dadurch gekennzeichnet, dass** die Füll- oder Verstärkungsstoffe mit einem Haftvermittler bzw. Haftvermittlersystem, vorzugsweise einem Haftvermittler auf Silanbasis, ausgerüstet sind.

9. Zusammensetzungen gemäß einem der Ansprüche 1 bis 8, **dadurch gekennzeichnet, dass** zusätzlich zu den Komponenten A), B) und C) noch Komponente D) wenigstens ein Copolymerisat aus mindestens einem α-Olefin mit mindestens einem Methacrylsäurester oder Acrylsäureester eines aliphatischen C₁ - C₂₀ Alkohols eingesetzt wird.

10. Zusammensetzungen gemäß Anspruch 9, **dadurch gekennzeichnet, dass** als Komponente D) ein Copolymerisat aus Ethen und Acrylsäure-(2-ethyl)-hexylester eingesetzt wird.

11. Stoffgemisch enthaltend wenigstens ein Copolymerisat aus mindestens einem α-Olefin mit mindestens einem Acrylsäureester eines aliphatischen C₁ - C₂₀ Alkohols und wenigstens eine Verbindung der Formel R¹-HC(SO₃Na)-R², worin R¹ und R² jeweils unabhängig voneinander für einen C₁₀ - C₂₁ Alkylrest stehen.

12. Stoffgemisch gemäß Anspruch 11, **dadurch gekennzeichnet, dass** ein Copolymerisat aus Ethen und Acrylsäure-(2-ethyl)-hexylester eingesetzt wird.

13. Verfahren zur Herstellung von Erzeugnissen, **dadurch gekennzeichnet, dass** man die einzelnen Komponenten der Zusammensetzungen gemäß einem der Ansprüche 1 bis 10 zu einer Formmasse vermischt, diese in Form eines Strangs austrägt, bis zur Granulierfähigkeit abkühlt und granuliert und einem Spritzguss unterzieht.

14. Verwendung des Stoffgemisches gemäß Anspruch 11 oder 12 oder der Zusammensetzungen gemäß einem der Ansprüche 1 bis 10, insbesondere in Form von Formmassen, zur Herstellung von Erzeugnissen, vorzugsweise lackierfähiger Erzeugnisse.

15. Verwendung gemäß Anspruch 14, **dadurch gekennzeichnet, dass** es sich um Erzeugnisse handelt, die einer elektrostatischen Lackierung unterzogen werden.
